(19) Europäisches Patentamt
European Patent Office
Office européen des brevets

(11) EP 4 779 712 A1

(12) **EUROPEAN PATENT APPLICATION**
published in accordance with Art. 153(4) EPC

(43) Date of publication:
22.07.2026 Bulletin 2026/30

(51) International Patent Classification (IPC):
H01M 4/36 (2006.01)    H01M 4/62 (2006.01)
H01M 4/525 (2010.01)   H01M 4/505 (2010.01)
H01M 4/131 (2010.01)   H01M 10/0525 (2010.01)
H01M 4/587 (2010.01)   H01M 4/38 (2006.01)
H01M 4/02 (2006.01)

(21) Application number: 25831235.4

(22) Date of filing: 20.06.2025

(52) Cooperative Patent Classification (CPC):
H01M 4/02; H01M 4/131; H01M 4/36; H01M 4/38;
H01M 4/505; H01M 4/525; H01M 4/587;
H01M 4/62; H01M 10/0525; Y02E 60/10

(86) International application number:
PCT/KR2025/008603

(87) International publication number:
WO 2025/264041 (26.12.2025 Gazette 2025/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 21.06.2024 KR 20240081414

(71) Applicant: LG Energy Solution, Ltd.
Seoul 07335 (KR)

(72) Inventors:
• LEE, Changwoo
  Daejeon 34122 (KR)
• HAN, Woo Ri
  Daejeon 34122 (KR)
• LEE, Yunju
  Daejeon 34122 (KR)
• SON, Soonhan
  Daejeon 34122 (KR)
• PARK, Jiyoung
  Daejeon 34122 (KR)
• KIM, Hongjae
  Daejeon 34122 (KR)

(74) Representative: Goddar, Heinz J.
Boehmert & Boehmert
Anwaltspartnerschaft mbB
Pettenkoferstrasse 22
80336 München (DE)

(54) **POSITIVE ELECTRODE ACTIVE MATERIAL LAYER COMPOSITION, POSITIVE ELECTRODE AND SECONDARY BATTERY INCLUDING SAME**

(57) Provided is a positive electrode active material layer composition including a positive electrode active material and a conductive material, wherein the conductive material comprises a carbon nanotube, and a ratio (D50/d50) of a particle diameter (D50) of the positive electrode active material at a cumulative volume of 50% to a particle diameter (d50) of the carbon nanotube at a cumulative volume of 50% satisfies Equation 1 below.

<Equation 1>

$$2.0 \leq D50/d50 \leq 2.5$$

[FIGURE 3]

EP 4 779 712 A1

**Description**

[TECHNICAL FIELD]

This application claims the benefit of priority based on Korean Patent Application No. 10-2024-0081414 filed on June 21, 2024, entire content disclosed in the document of the patent applications is included as a part of this specification.
The present invention relates to a positive electrode active material layer composition, a positive electrode and secondary batteries including the same.

[BACKGROUND ART]

The electrodes of secondary batteries are manufactured by coating an active material on the surface of a metal electrode current collector. The electrode current collector may be, for example, a metal foil made of aluminum or copper, and the active material is coated in slurry form on one side or both sides of the electrode current collector. Carbon nanotubes, which have high electrical conductivity, are increasingly being used as conductive materials for batteries.

[DISCLOSURE]

[TECHNICAL PROBLEM]

It is an object of the present invention to provide a positive electrode active material layer composition to which specific conditions based on the correlation between the particle diameter of the positive electrode active material and the particle diameter of the conductive material, which affect electrode resistance and electronic performance, is applied.
It is an object of the present invention to provide a positive electrode active material layer composition to which a conductive material content derived from the correlation between the particle diameter of the positive electrode active material and the particle diameter of the conductive material is applied.
The objects of the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

[TECHNICAL SOLUTION]

In one embodiment of the present invention, provided is a positive electrode active material layer composition including a positive electrode active material and a conductive material, wherein the conductive material comprises a carbon nanotube, and a ratio D50/d50 of a particle diameter D50 of the positive electrode active material at a cumulative volume of 50% to a particle diameter d50 of the carbon nanotube at a cumulative volume of 50% satisfies Equation 1 below.

$$<\text{Equation 1}>$$

$$2.0 \leq D50/d50 \leq 2.5$$

The particle diameter D50 of the positive electrode active material at the cumulative volume of 50% may be $7\mu m$ to $8\mu m$, and the particle diameter d50 of the carbon nanotube at the cumulative volume of 50% is $2.5\mu m$ to $4.0\mu m$.
The positive electrode active material may have a composition having a bimodal particle size distribution with two peaks at particle diameters of $3\mu m$ to $5\mu m$ and $10\mu m$ to $12\mu m$.
The mass ratio of the positive electrode active material to the carbon nanotube may be a value calculated by applying the ratio D50/d50 to a formula for calculating a percolation threshold.
The amount of the carbon nanotube may be 0.70 to 0.75 wt% based on 100 wt% of a total weight of the positive electrode active material and the carbon nanotube.
The positive electrode active material may be a lithium complex transition metal compound represented by chemical formula 1 below:

[Chemical Formula 1]     $Li_aNi_{(1-x-y)}Co_xM1_yM2_wO_2$

in Chemical Formula 1,

1.0≤a≤1.5, 0<x≤0.2, 0≤y≤0.2, 0≤w≤0.1, 0<x+y≤0.2,
M1 may be at least one metal selected from Mn and Al, and
M2 may be at least one metal element selected from a group consisting of Ba, Ca, Zr, Ti, Mg, Ta, Nb and Mo.

The carbon nanotube may include at least one selected from the group consisting of single-walled carbon nanotube, multi-walled carbon nanotube, bundled carbon nanotube and combinations thereof.

In one embodiment of the present invention, provided is a positive electrode for a secondary battery including: a current collector; and a positive electrode active material layer disposed on the current collector, wherein the positive electrode active material layer including a positive electrode active material layer composition.

The positive electrode active material layer may include the positive electrode active material in an amount of 80 to 99wt% based on a total weight of the positive electrode active material layer.

In one embodiment of the present invention, provided is a secondary battery including a positive electrode of claim 9, a negative electrode and separator.

[ADVANTAGEOUS EFFECTS]

The positive electrode active material layer composition according to an embodiment of the present invention may reduce the electrode resistance of a secondary battery using the positive electrode active material layer manufactured therefrom.

The positive electrode active material layer composition according to an embodiment of the present invention improves the lifespan characteristics of a secondary battery using the positive electrode active material layer manufactured therefrom.

In addition to the advantageous effects described above, specific effects of the present invention will be described further while describing specific details of the present invention.

[BRIEF DESCRIPTION OF DRAWINGS]

FIG. 1 is a graph illustrating the relationship between the particle diameter ratio of the positive electrode active material and the conductive material and the electrochemical performance of the battery cells manufactured according to the embodiment and comparative example.

FIG. 2 is a graph illustrating the relationship between the relative content of the conductive material and the electrochemical performance of the battery cells manufactured according to the embodiment and comparative example.

FIG. 3 is a graph illustrating the relationship between the particle diameter ratio of the positive electrode active material and the conductive material and the relative content of the conductive material in the battery cells manufactured according to the embodiment and comparative example.

FIG. 4 is a perspective view of a battery can applicable to the battery cell according to the embodiment.

FIGS. 5 and 6 are perspective views illustrating the first electrode, second electrode and separators for fabricating an electrode assembly to be accommodated in the battery can before and after lamination, respectively, and FIG. 7 is a plan view of the laminated first electrode, second electrode and separators of FIG. 6.

FIGS. 8 and 9 are perspective view and side view of an electrode assembly manufactured by winding the laminate of FIGS. 6 and 7 into a jelly-roll shape.

FIGS. 10 and 11 are perspective views illustrating an electrode assembly with a current collecting plate attached to the upper portion thereof and without current collecting plate attached to the lower portion thereof.

FIG. 12 is a cross-sectional view illustrating the process of accommodating the electrode assembly of FIGS. 10 and 11 into a battery can.

FIG. 13 is a cross-sectional view illustrating the process of welding the first electrode terminal and the current collecting plate.

FIG. 14 illustrates the process of press-fitting a cap into a battery can.

FIG. 15 is a cross-sectional view illustrating the electrode assembly with an electrode connecting portion of the cap bonded to the tab of the second electrode thereof and the contacting surface of the cap bonded to the contacting wall surface of the battery can.

[DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled to," or "in contact with" another element, it should be understood that the element may be "directly connected to," "directly coupled to," or "directly in contact with" another element, or the element may be "connected to," "coupled to," or "in contact with" another element with yet another element interposed therebetween or via yet another element.

In one embodiment of the present invention, provided is a positive electrode active material layer composition including a positive electrode active material and a conductive material, wherein the conductive material comprises a carbon nanotube, and a ratio D50/d50 of a particle diameter D50 of the positive electrode active material at a cumulative volume of 50% to a particle diameter d50 of the carbon nanotube at a cumulative volume of 50% satisfies Equation 1 below.

<Equation 1>

$$2.0 \leq D50/d50 \leq 2.5$$

When carbon nanotubes are dispersed using ultrasonic waves, a mill, a high-pressure homogenizer, etc., the particle size of the carbon nanotubes changes, which in turn alters the electrode characteristics. Therefore, since the particle size of carbon nanotube is related to electrode characteristics, it is necessary to control the particle size of carbon nanotube to an appropriate level to ensure good adhesion to the electrode active material surface and improve resistance and battery performance.

A secondary battery including positive electrodes employing a positive electrode active material layer composition with particle size conditions satisfying Equation 1 exhibit improved electrode resistance and electronic performance.

Herein, "D50" and "d50" are particle size values defined in the cumulative volume distribution of powder measured using the laser diffraction method. Specifically, D50 is the particle diameter when the amount of the cumulative volume of the positive electrode active material is 50%, and d50 is the particle diameter when the amount of the cumulative volume of the carbon nanotube is 50%. For example, the particle size value of the cumulative volume distribution may be measured by dispersing the positive electrode active material powder or carbon nanotube powder in a dispersion medium such as ethanol, introducing the same into a commercially available laser diffraction method particle size measuring device (e.g., Microtrac MT 3000), irradiating the same with ultrasound at approximately 28kHz with an output of 60W, and then obtaining a cumulative volume particle size distribution graph.

The positive electrode active material may include a single-crystal lithium composite metal oxide, a polycrystalline lithium composite metal oxide or at least one combination of thereof.

Herein, a single crystal particle refers to a particle in which the crystal lattice structure is regularly maintained throughout the particle encompassing a single particle, i.e., a primary particle in which the particles are separated and/or dispersed in an independent phase without being mutually aggregated in morphology, or a secondary particle in which 2 to 10 such primary particles are aggregated.

Herein, a polycrystal refers to a secondary particle in which multiple primary particles are aggregated.

Herein, 'particle' may encompass both primary and secondary particles, unless otherwise defined.

In one embodiment, the positive electrode active material may have a composition having a bimodal particle size distribution with two peaks at particle diameters of $3\mu m$ to $5\mu m$ and $10\mu m$ to $12\mu m$. For example, when the positive electrode active material is a mixture of a single-crystal lithium composite metal oxide and a polycrystalline lithium composite metal oxide, a bimodal distribution is exhibited as the peak appearing in the particle size distribution of the single-crystal lithium composite metal oxide alone and the peak appearing in the particle size distribution of the polycrystalline lithium composite metal oxide alone are combined. By using a positive electrode active material having a bimodal particle size distribution within the numerical range to satisfy Equation 1, the electrode resistance and electronic performance of a secondary battery to which the positive electrode active material is applied may be improved.

In one embodiment, the positive electrode active material may have a particle diameter D50 of $7\mu m$ to $8\mu m$ at a cumulative volume of 50%. The particle diameter D50 at 50% cumulative volume of the positive electrode active material is a value measured for the entire mixture when the positive electrode active material is a mixture of a single-crystal lithium composite metal oxide and a polycrystalline lithium composite metal oxide. By satisfying Equation 1 with the positive electrode active material having a particle diameter D50 within the numerical range at the cumulative volume of 50%, the electrode resistance and electronic performance of a secondary battery using the positive electrode active material may be improved.

In one embodiment, the positive electrode active material may be a lithium complex transition metal compound represented by chemical formula 1 below:

[Chemical Formula 1]　　　　$Li_aNi_{(1-x-y)}Co_xM1_yM2_wO_2$

in Chemical Formula 1,

$1.0 \leq a \leq 1.5$, $0 < x \leq 0.2$, $0 \leq y \leq 0.2$, $0 \leq w \leq 0.1$, $0 < x+y \leq 0.2$,
M1 may be at least one metal selected from Mn and Al, and
M2 may be at least one metal element selected from the group consisting of Ba, Ca, Zr, Ti, Mg, Ta, Nb and Mo.

The carbon nanotubes included as the conductive material may include, for example, at least one selected from the group consisting of single-walled carbon nanotubes, multi-walled carbon nanotubes, bundled carbon nanotubes and combinations thereof.

In one embodiment, the particle diameter d50 of the carbon nanotubes at the cumulative volume of 50% may be $2.5\mu m$ to $4.0\mu m$. By satisfying Equation 1 with carbon nanotubes having a particle diameter d50 within the numerical range at the cumulative volume of 50%, the electrode resistance and electronic performance of secondary batteries to which the carbon nanotubes are applied may be improved.

In one embodiment, the mass ratio of the positive electrode active material to the carbon nanotube, which is a conductive material, may be a value calculated by applying the ratio D50/d50 to a formula for calculating a percolation threshold X. That is, the mass ratio of the positive electrode active material to the carbon nanotube may be a value according to the formula for calculating the ratio D50/d50 as a percolation threshold.

Battery performance may be optimized by implementing the optimal ratio of the conductive material to the positive electrode active material within the limited space of a secondary battery. The conductive material content is determined by applying the percolation threshold X calculated from the particle size range of the positive electrode active material and carbon nanotubes according to Equation 1. A secondary battery employing such ratio of positive electrode active material and conductive material may exhibit superior battery performance.

When the conductive material surrounds the active material, a critical point is reached where a conductive pathway is formed, allowing electricity to flow. That is, the volume required for the conductive material to completely percolate between the active materials is calculated as the percolation threshold X. For example, when the conductive material particle diameter is constant, the volume of conductive material required for percolation increases as the active material particle diameter increases. In this way, the percolation threshold X is calculated using the particle diameters of the active material and conductive material as variables, and the relative content of the conductive material to the active material is derived from the calculated X value.

Specifically, the percolation threshold X is calculated using Equation 1 below, and the mass a of the carbon nanotube and the mass b of the positive electrode active material are determined.

$$< \text{Calculation formula 1} >$$

$$Y = -0.0981 \times D50/d50 + 1.0509$$

$$X = 0.02077 \times Y$$

$$a = X \times (\text{the true density of the carbon nanotube})$$

$$b = (1-X) \times (\text{the true density of the positive electrode active material})$$

where a is the mass of the carbon nanotube, and b is the mass of the positive electrode active material.

When the D50/d50 values is adjusted in Equation 1 to satisfy Equation 1, the Y value is determined, from which the percolation threshold X is calculated, and a and b may be determined. From the calculated values of a and b, a/(a+b) may be obtained to calculate the mass ratio of the carbon nanotube to the positive electrode active material.

Within the numerical range of Equation 1, the mass ratio of the carbon nanotubes to the positive electrode active material satisfies the range of Equation 2 below.

<Equation 2>

$$0.007 \leq a/(a+b) \leq 0.0075$$

In one embodiment, the amount of the carbon nanotube may be 0.70 to 0.75 wt% based on 100 wt% of a total weight of the positive electrode active material and the carbon nanotube. When the conductive material includes only the carbon nanotubes, the content ratio of the carbon nanotubes ultimately corresponds to the content of the conductive material.

In one embodiment, the conductive material may include only the carbon nanotubes without including any other conductive material other than the carbon nanotubes.

In one embodiment, the conductive material may further include any other conductive material other than the carbon nanotubes. Conductive materials other than the carbon nanotubes may be a known material that does not cause a chemical change in the battery and is electronically conductive, such as graphite, for example, natural graphite or artificial graphite; The positive electrode active material layer composition may include carbon-based materials such as carbon black, acetylene black, Ketjen black, channel black, furnace black, lamp black, summer black and carbon fiber; metal powders or metal fibers such as copper, nickel, aluminum and silver; conductive whiskeys such as zinc oxide and potassium titanate; conductive metal oxides such as titanium oxide; or conductive polymers such as polyphenylene sulfonate.

The positive electrode active material layer composition may further include known components in addition to the positive electrode active material and the conductive material.

For example, the positive electrode active material layer composition may further include a binder. The binder plays a role in improving the adhesion between positive electrode active material particles and the adhesion between the positive electrode active material and the positive electrode current collector. Specific examples thereof include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer rubber (EPDM rubber), sulfonated-EPDM, styrene butadiene rubber (SBR), fluororubber, or various copolymers thereof, and one of these alone or a mixture of two or more thereof, but not limited thereto, may be used.

The positive electrode active material layer composition may further include known additives depending on the function to be imparted.

In one embodiment, the positive electrode active material layer formed with the positive electrode active material layer composition may include 80 to 99wt% of the positive electrode active material, for example, 85 to 99wt%, or for another example, 90 to 99wt%, of the positive electrode active material based on the total weight of the positive electrode active material layer.

The positive electrode active material layer formed with the positive electrode active material layer composition may include the carbon nanotube as a conductive material at a content ratio satisfying Equation 2 relative to the content of the positive electrode active material contained therein.

In one embodiment of the present invention, provided is a positive electrode for a secondary battery including a current collector; and a positive electrode active material layer disposed on a current collector and including the positive electrode active material layer composition.

The positive electrode active material layer may be formed on one surface or both surfaces of the current collector.

The current collector included in the positive electrode is not particularly limited as long as the current collector is conductive and does not cause chemical changes in the battery. For example, stainless steel, aluminum, nickel, titanium, calcined carbon or aluminum, or stainless steel surface-treated with carbon, nickel, titanium, silver, etc. may be used. In addition, the positive electrode current collector typically has a thickness of 1 to 500μm, and fine unevenness may be formed on the surface thereof to enhance the adhesion of the positive electrode active material. For example, the current collector may be used in various forms such as films, sheets, foils, nets, porous materials, foams and non-woven fabrics. In one embodiment, the current collector may be a metal foil.

The positive electrode active material layer may be manufactured from the aforementioned positive electrode active material layer composition. Therefore, the positive electrode active material and the carbon nanotubes included in the positive electrode active material layer as the conductive material satisfy the particle size conditions of Equation 1 and also satisfy the content ratio of Equation 2. Detailed descriptions of the carbon nanotube as the positive electrode active material and the conductive material are as described above.

In one embodiment, the positive electrode active material layer may include 80 to 99wt%, for example, 85 to 99wt%, or, for another example, 90 to 99wt% of the positive electrode active material based on the total weight of the positive electrode active material layer.

In one embodiment of the present invention, provided is a secondary battery including the positive electrode, the negative electrode and a separator.

The negative electrode may include a current collector and a negative electrode active material layer formed on one side or both sides of the current collector. The negative electrode active material layer may comprise a negative electrode active material, a conductive material, and a binder.

The current collector included in the negative electrode is not particularly limited as long as the current collector is conductive and does not cause chemical changes in the battery. For example, copper, stainless steel, aluminum, nickel, titanium, calcined carbon or aluminum, or stainless steel surface-treated with carbon, nickel, titanium, silver, etc. may be used. For example, transition metals that adsorb carbon well, such as copper and nickel, may be used as the current collector. The thickness of the current collector may range, but not limited thereto, from $1\mu m$ to $500\mu m$.

The negative electrode active material may be a compound capable of reversible lithium intercalation and deintercalation. Examples of the negative electrode active material include carbon-based negative electrode active materials such as artificial graphite, natural graphite, graphitized carbon fiber and amorphous carbon; silicon-based negative electrode active materials such as Si, Si-Me alloys (wherein Me includes at least one selected from the group consisting of Al, Sn, Mg, Cu, Fe, Pb, Zn, Mn, Cr, Ti and Ni), $SiO_y$ (0<y<2), and Si-C composites; and any one or a mixture of two or more thereof may be used.

The positive electrode and the negative electrode may be manufactured according to conventional manufacturing methods for positive electrodes and negative electrodes, except that the positive electrode includes the above-described positive electrode active material layer composition and the positive electrode active material layer formed using the same. Specifically, the positive electrode active material layer may be manufactured by applying the positive electrode active material composition onto a current collector, followed by drying and rolling. The negative electrode active material layer may also be manufactured by applying the negative electrode active material layer composition including the negative electrode active material, the conductive material and the binder onto a current collector, followed by drying and rolling.

Known solvents may be used as solvents for the positive electrode active material layer composition and the negative electrode active material layer composition, and examples thereof include dimethyl sulfoxide (DMSO), isopropyl alcohol, N-methylpyrrolidone (NMP), acetone and water. One of these may be used alone, or a mixture of two or more may be used. The any amount of solvent used is sufficient as long as the active material, conductive material and binder are dissolved or dispersed, taking into account the coating thickness and manufacturing yield of the composition, and to a viscosity thereof ensures excellent thickness uniformity during subsequent coating for the manufacture of positive and negative electrodes. Alternatively, the positive and negative electrodes may be manufactured by casting the active material layer composition onto a separate support, then peeling the film from the support and laminating the same onto a current collector.

The separator separates the negative and positive electrodes and provides a path for lithium ions, and any known separator material may be used. For example, one with low resistance to electrolyte ion migration and excellent electrolyte impregnation capacity may be selected. For example, a porous polymer film such as a porous polymer film made of a polyolefin polymer such as ethylene homopolymer, propylene homopolymer, ethylene/butene copolymer, ethylene/hexene copolymer and ethylene/methacrylate copolymer, or a laminated structure of two or more layers thereof, may be used. Another example may be a conventional porous nonwoven fabric such as a nonwoven fabric made of high-melting-point glass fibers or polyethylene terephthalate fibers. Another example may be a coated separator containing a ceramic component or polymer material to ensure heat resistance or mechanical strength, optionally in a single-layer or multi-layer structure.

The electrolyte may include, but not limited to, an organic liquid electrolyte, an inorganic liquid electrolyte, a solid polymer electrolyte, a gel-type polymer electrolyte, a solid inorganic electrolyte and a molten inorganic electrolyte.

In one embodiment, the electrolyte may include a non-aqueous organic solvent and a metal salt.

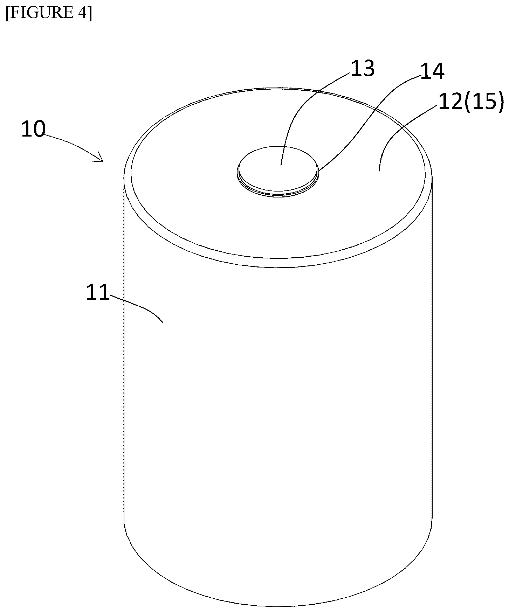

Hereinafter, the structure of a cylindrical battery cell according to an embodiment of the present invention will be described with reference to FIGS. 4 to 15.

The battery cell of the embodiment may be, for example, a cylindrical battery cell whose form factor ratio (defined as the diameter of the cylindrical battery cell divided by the height, that is, the ratio of the diameter $\Phi$ to the height H) is greater than approximately 0.4.

Here, the form factor refers to values representing the diameter and the height of a cylindrical battery cell. The cylindrical battery cell to be applied to the pressure tester may be, for example, a 46110 cell, a 48750 cell, a 48110 cell, a 48800 cell or a 46800 cell. In the values representing the form factor, the first two numbers represent the diameter of the cell, the next two numbers represent the height of the cell, and the last number 0 represents that the cross-section of the cell is circular.

The battery cell to be applied to the pressure tester may be a cell that is approximately cylindrical with a diameter of approximately 46 mm, a height of approximately 110 mm and a form factor ratio of 0.418.

A battery cell according to another embodiment may be a cell that is approximately cylindrical with a diameter of approximately 48 mm, a height of approximately 75 mm and a form factor ratio of 0.640.

A battery cell according to yet another embodiment may be a cell that is approximately cylindrical with a diameter of approximately 48 mm, a height of approximately 110 mm and a form factor ratio of 0.418.

A battery cell according to yet another embodiment may be a cell that is approximately cylindrical with a diameter of approximately 48 mm, a height of approximately 80 mm and a form factor ratio of 0.600.

A battery cell according to another embodiment may be a cell that is approximately cylindrical with a diameter of approximately 46 mm, a height of approximately 80 mm and a form factor ratio of 0.575.

The pressure tester of the present invention may be apparently applied to battery cells with a form factor ratio of approximately 0.4 or less, for example, 18650 cells, 21700 cells, etc. For an 18650 cell, its diameter is approximately 18 mm, its height is approximately 65 mm, and the form factor ratio is 0.277. For a 21700 cell, its diameter is approximately 21 mm, its height is approximately 70 mm, and the form factor ratio is 0.300.

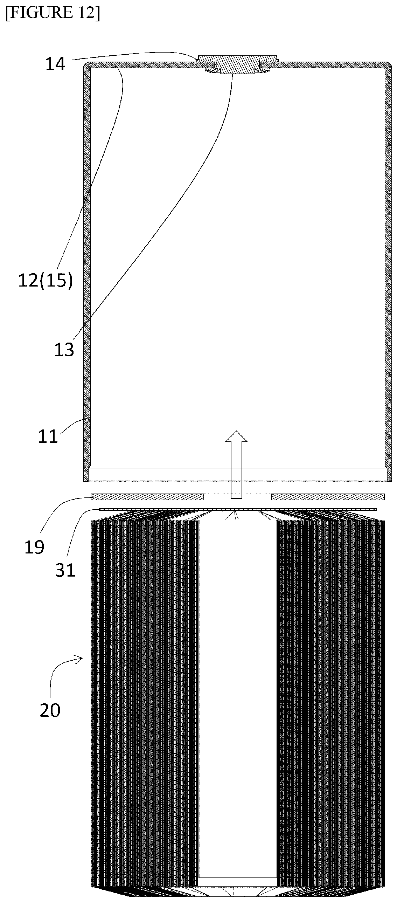

Referring to FIGS. 4 and 12, the battery can 10 includes a cylindrical sidewall 11 and a bottom 12 connected to one axial end of the sidewall 11.

The bottom 12 and the side wall 11 may be manufactured by subjecting a metal sheet with nickel plated on the surface of steel to deep drawing, and trimming the front end of the side wall 11 with a punch while holding the same with a blank holder. Apparently, the material of the can 10 is not limited thereto.

The bottom 12 has a hole in the center thereof, and a first electrode terminal 13 may be fitted into the hole. The first electrode terminal 13 may be riveted and fixed to the bottom 12 with a terminal gasket 14 interposed therebetween. The terminal gasket 14 is interposed between the first electrode terminal 13 and the bottom 12, sealing the battery can 10 to prevent electrolyte leakage and electrically insulate the first electrode terminal 13 from the bottom 12.

However, the connection method between the first electrode terminal 13 and the bottom 12 is not limited thereto. For example, as long as the structure seals the space between and electrically insulate the first electrode terminal 13 and the bottom 12, various other fixing methods such as bolt- and-nut joints, glass seals, or chrome coating and PP-MAH thermal bonding may also be applied.

The first electrode terminal 13 may have first polarity, and the battery can 10 may have second polarity. Accordingly, both the bottom 12 of the battery can 10 and the sidewall 11 connected thereto may have second polarity.

Accordingly, the battery can 10 may have both the first electrode terminal 13 and the second electrode terminal 15 located at one axial end. As a result, the battery can 10 may have both the bus bar connected to the first electrode terminal 13 and the bus bar connected to the second electrode terminal 15 located at the one axial end, i.e. the upper portion of the battery can 10.

In one embodiment, the first electrode terminal 13 may be the anode terminal, and the second electrode terminal 15 may be the cathode terminal. It may be vice versa.

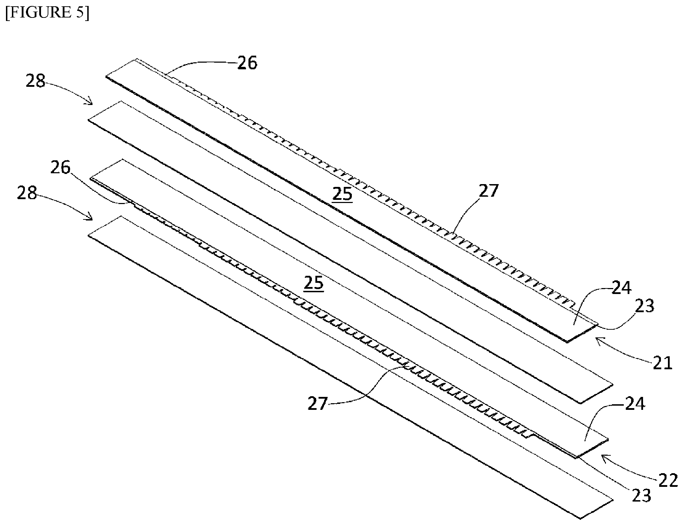

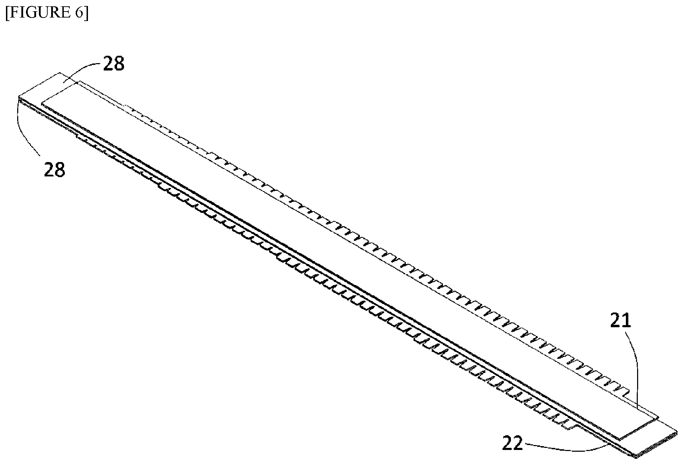

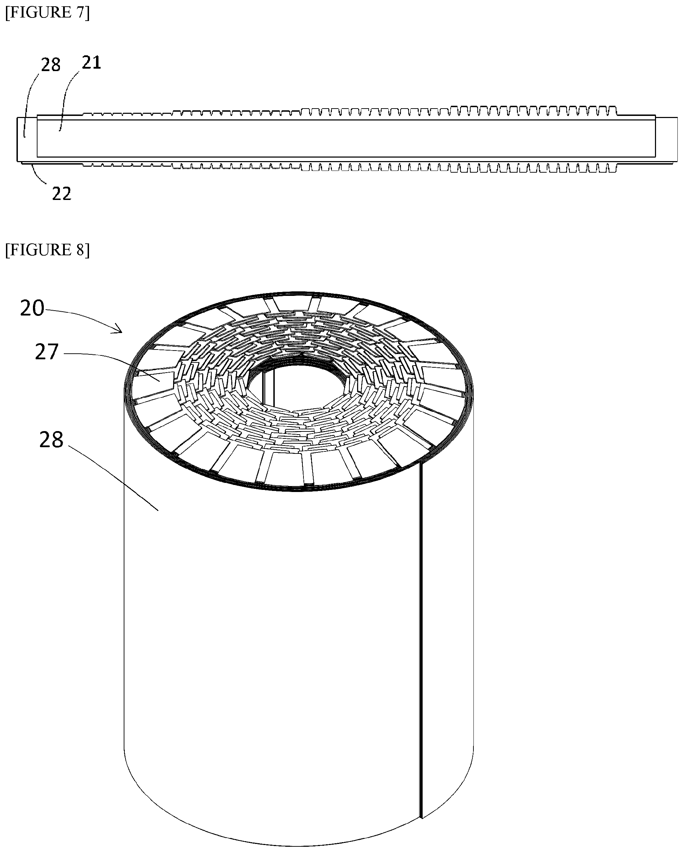

The electrode assembly 20 is accommodated in the battery can 10. The electrode assembly 20 is manufactured by preparing a first electrode 21, a second electrode 22, and a separator 28 that have a predetermined width and extend in a lengthwise direction as shown in FIG. 5, and forming a laminate by sequentially stacking the first electrode 21, the separator 28, the second electrode 22, and the separator 28 as shown in FIGS. 6 and 7, and winding the laminate into a jelly-roll form around a core shaft.

The first electrode 21 may be the positive electrode, and the second electrode 22 may be the negative electrode. It may be vice versa.

The first electrode 21 and the second electrode 22 are manufactured in the form of sheets. The electrode sheet is manufactured by applying an active material layer 24 to the surface of a current collector 23. The electrode sheet has a coated portion 25 where the active material layer 24 is applied, and a non-coated portion 26 without the active material layer 24. The anode sheet has a non-coated portion 26 at first widthwise end thereof, and the cathode sheet has a non-coated portion 26 at a second widthwise end thereof.

The non-coated portion 26 is exposed or protrude in the widthwise direction from the laminate. The non-coated portion 26 itself functions as an electrode tab.

The non-coated portion 26 may be provided with notches at a predetermined interval to form notched tabs 27 in the shape of a flag.

In the embodiment, the notched tabs 27 having a shape of an isosceles trapezoid are exemplified. However, the notched tabs 27 may have various shapes such as a semicircle, a semi-ellipse, a triangle, a rectangle, a parallelogram, etc.

In addition, in the embodiment, the notched tabs 27 having the same width and arranged along the lengthwise direction are exemplified. However, the width of the notched tabs may be gradually or stepwisely increased from the core toward the outer circumference.

In addition, in the embodiment, the notched tabs 27 with gradually increasing height from the core toward the outer circumference are exemplified. However, the height of the notched tabs may be a constant or may decrease gradually.

In addition, in the embodiment, exemplified is a structure with notched tabs 27 removed from predetermined sections of the centripetal end and the centrifugal end of the non-coated portion 26. However, it is also apparent that the notched tabs are not removed from the centripetal end of the non-coated portion, and the notched tabs are not removed from the centrifugal end of the non-coated portion.

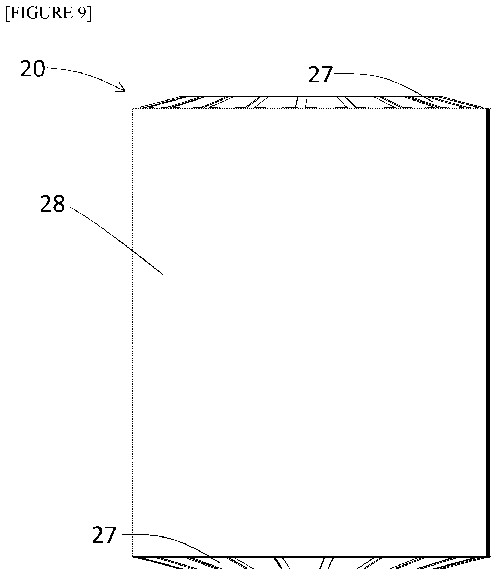

In the jelly-roll type electrode assembly 20, the notched tab 27 may be bent in the radial direction and flattened. The notched tab 27 may be bent radially inward or radially outward. In the embodiment, exemplified is a structure with the notched tabs 27 bent radially inward as shown in FIGS. 8 and 9.

The notched tabs 27 may be bent one by one during the process of forming the jelly-roll type electrode assembly 20 by winding the laminate. Alternatively, the notched tabs 27 may be bent all at once after the jelly-roll type electrode assembly is formed by winding the laminate.

The notched tabs 27 of the first electrode 21 and the notched tabs 27 of the second electrode 22 that are folded and overlapped in the radial direction may provide planes substantially perpendicular to the axial direction at two axial ends of the electrode assembly 20, respectively as shown in FIG. 9.

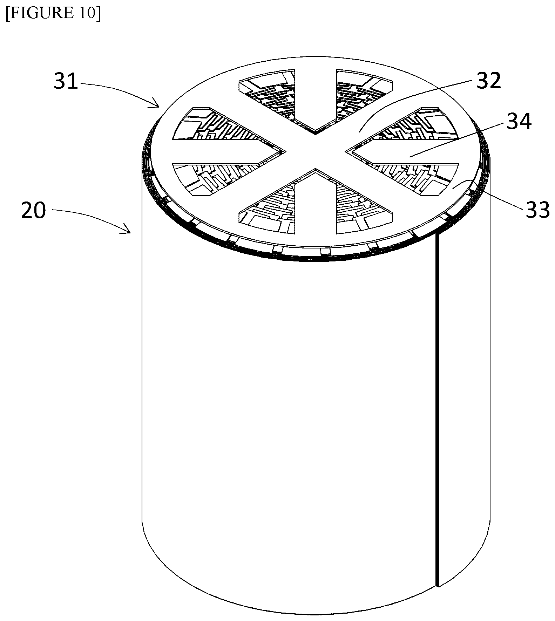

As shown in FIG. 10, the current collecting plate 31 may be bonded to the substantially flat surfaces provided by the notched tabs 27 exposed at the two axial ends of the electrode assembly 20.

The current collecting plate 31 may be manufactured by punching, trimming, piercing and bending a metal sheet.

Referring to FIG. 10, the current collecting plate 31 includes a terminal connecting portion 32 extending radially from the center, a ring portion 33 connecting the centrifugal edge of the terminal connecting portion 32 in a circumferential direction, and an electrode connecting portion 34 extending centripetally from the ring portion 33 without being connected to the terminal connecting portion 32. The center of the terminal connecting portion 32 covers at least a portion of the core hollow portion of the electrode assembly 20.

The electrode connecting portion 34 is bonded to the notched tab 27 of the first electrode 21 of the electrode assembly 20 by laser welding or the like, before the electrode assembly 20 is inserted into the battery can 10.

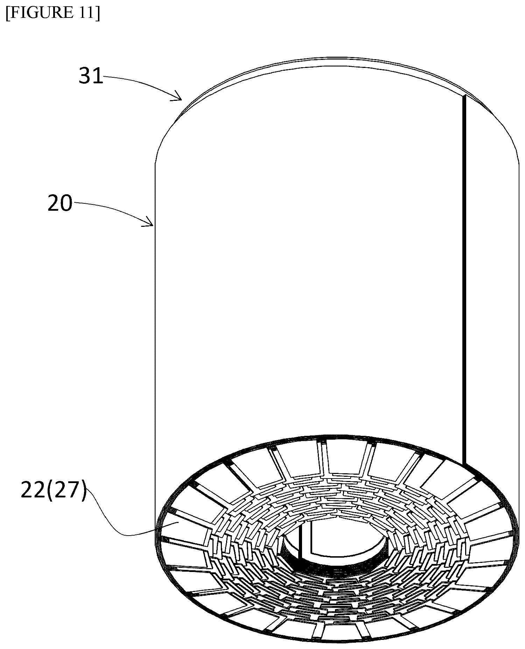

Referring to FIG. 11, the current collecting plate may not be connected to the notched tab 27 of the second electrode 22 of the electrode assembly 20. Apparently, the present invention is not limited to a structure in which the current collecting plate is not connected to the notched tab 27 of the second electrode 22.

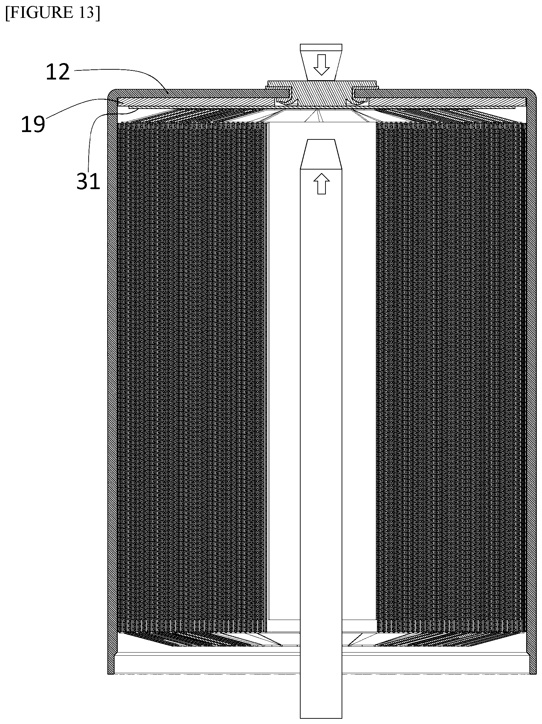

As shown in FIGS. 12 and 13, the electrode assembly 20 is accommodated in the battery can 10 with the current collecting plate 31 facing the bottom 12 of the battery can 10. Here, an insulator 19 is interposed between the current collecting plate 31 and the bottom 12 of the battery can 10 to electrically insulate the current collecting plate 31 from the bottom 12.

In addition, the terminal connecting portion 32 of the current collecting plate 31 is bonded to the first electrode terminal 13 fixed to the battery can 10 by resistance welding, ultrasonic welding or laser welding. The welding device for forming welded portion W of the current collecting plate 31 and the first electrode terminal 13 may be used to approach the back surface of the center of the terminal connecting portion 32 of the current collecting plate 31 through the core cavity of the electrode assembly 20 from the opposite axial end of the electrode assembly 20. Apparently, the current collecting plate 31 and the first electrode terminal 13 may also be bonded using other methods such as brazing or soldering. That is, any method that electrically connects and fixes the current collecting plate 31 and the first electrode terminal 13 may be applied.

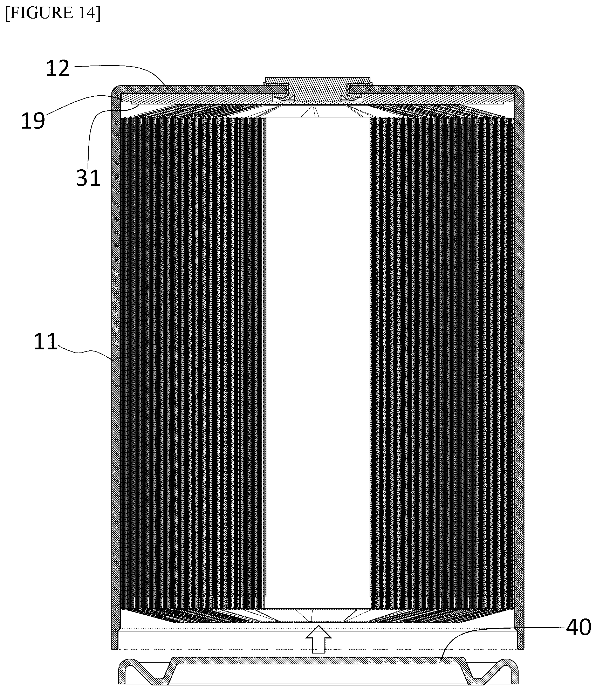

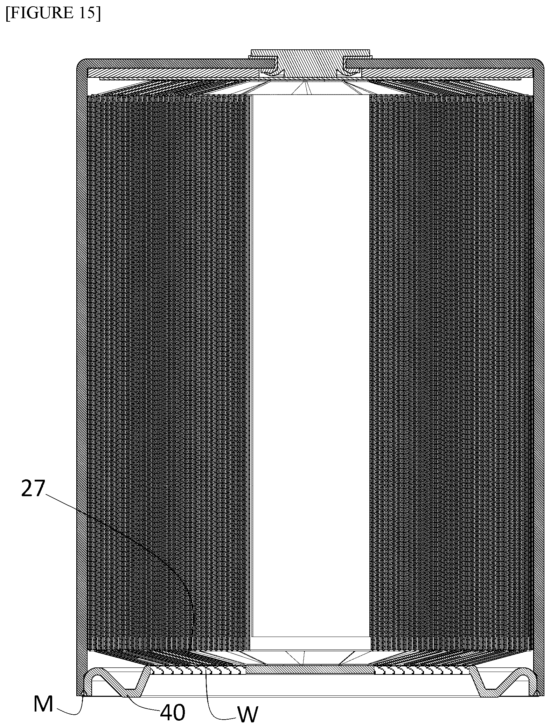

Referring to FIGS. 14 and 15, with the electrode assembly 20 accommodated in the battery can 10 and the first electrode 21 connected to the first electrode terminal 13, the notched tab 27 of the second electrode 22 may be directly connected to the cap 40 that is press-fitted through the open end of the battery can 10. Accordingly, the second electrode 22 is electrically connected to the notched tab 27 through the welded portion W of the cap 40. Apparently, other bonding methods such as brazing or soldering may be applied to the notched tab 27 and cap 40 in addition to the welding method.

The edge of the cap 40 is electrically connected to the sidewall 11 of the battery can 10 and sealed. Accordingly, the second electrode 22 may be electrically connected to the cap 40 and the battery can 10. Various methods, such as welding, brazing, and soldering, may be applied to the bonding area M between the cap 40 and the battery can 10 for electrical connection and sealing.

Hereinafter, embodiments and comparative examples of the present invention will be described. The embodiment described below is merely one embodiment of the present invention, and the present invention is not limited to the embodiments described below.

(EMBODIMENT)

COMPARATIVE EXAMPLE 1

A lithium composite transition metal, $LiNi94.5Co2.9Mn2.7O2$, was prepared as a positive electrode active material, with single crystal particles having a D50 of $3.9\mu m$, as measured by laser diffraction method.

Carbon nanotube powder, with a d50 measured by laser diffraction method as shown in Table 1, was prepared as a conductive material of a 4.3wt% pre-dispersant.

The percolation threshold X calculated based on the D50 of the positive electrode active material and d50 of the carbon nanotubes is shown in Table 1, and the calculated carbon nanotube content (the carbon nanotube content based on the total content of 100wt% of the positive electrode active material and carbon nanotubes) is also shown in Table 1.

The prepared positive electrode active material and the carbon nanotube conductive material were mixed according to the content ratios calculated in Table 1, and PVDF binder and N-methylpyrrolidone were mixed to manufacture a composition for the positive electrode active material.

The composition for the positive electrode active material was applied to one surface of an aluminum current collector sheet, dried at 120°C, and rolled to produce a positive electrode plate.

To manufacture the negative electrode, a negative electrode slurry was prepared by mixing the negative electrode active material (graphite), conductive material (SW-CNT), binder (AX-B096) and additive (BH230) in water at a weight ratio of 98.05:0.05:0.7:0.9. The negative electrode slurry was applied to one side of a copper current collector sheet, dried at 150°C, and rolled to produce a negative electrode plate.

A separator was interposed between the positive and negative electrode plates manufactured as described above to sequentially stack separator/positive electrode plate/separator/negative electrode plate, and then wound to produce a jelly-roll type electrode assembly. The electrode assembly manufactured as described above was inserted into a cylindrical battery can and the electrolyte was injected to produce a 4680 cell.

COMPARATIVE EXAMPLE 2

Polycrystalline lithium composite transition metal particles, $LiNi_{97.2}Co_{0.3}Mn_{2.5}O_2$, with D50 of 11.3$\mu$m measured by laser diffraction method, were prepared as the positive electrode active material.

Carbon nanotube powders with d50 measured by laser diffraction method, as shown in Table 1, were prepared as the conductive material.

The percolation threshold X calculated based on the D50 of the positive electrode active material and d50 of the carbon nanotubes is shown in Table 1, and the calculated carbon nanotube content (the content of carbon nanotubes based on the total content of 100wt% of the positive electrode active material and carbon nanotubes) is also shown in Table 1.

The prepared positive electrode active material and carbon nanotube conductive material were mixed at the content ratios calculated in Table 1, and a PVDF binder and N-methylpyrrolidone were mixed to manufacture a composition for the positive electrode active material. Except for using the prepared composition for the positive electrode active material, a positive electrode plate was manufactured using the same method as in the first embodiment. Using this, a 4680 cell was manufactured using the same method as in the first embodiment.

FIRST TO THIRD EMBODIMENTS AND COMPARATIVE EXAMPLE 3-5

A positive electrode active material was prepared by mixing (i) single-crystal particles of lithium composite transition metal $LiNi_{94.5}Co_{2.9}Mn_{2.7}O_2$ with a D50 of 3.9$\mu$m measured by laser diffraction method and (ii) polycrystalline particles of lithium composite transition metal $LiNi_{97.2}Co_{0.3}Mn_{2.5}O_2$ with a D50 of 11.3$\mu$m measured by laser diffraction method. The positive electrode active material prepared by mixing single-crystal and polycrystalline particles had a D50 of 7.6$\mu$m measured by laser diffraction method.

Carbon nanotube powders with d50 values as measured by laser diffraction method and listed in Table 1 were prepared as conductive materials.

The percolation threshold X calculated based on the D50 of the positive electrode active material and the d50 of the carbon nanotubes is shown in Table 1. The calculated carbon nanotube content (the carbon nanotube content based on the total 100wt% of the positive electrode active material and carbon nanotubes) is also shown in Table 1.

The prepared positive electrode active material and the carbon nanotube conductive material were mixed at the content ratios calculated in Table 1, and a PVDF binder and N-methylpyrrolidone were mixed to prepare a composition for the positive electrode active material. A positive electrode plate was prepared using the same method as in the first embodiment, except that the prepared composition for the positive electrode active material was used. Using this, a 4680 cell was manufactured using the same method as in the first embodiment.

[Table 1]

| | positive electrode active material D50 [μm] | conductive material d50 [μm] | D50 /d50 | <Calculation Formula 1> Calculated value | | | | conductive material relative content [wt%] |
|---|---|---|---|---|---|---|---|---|
| | | | | Y | Percolation threshold, X [cm³] | a [g] | b [g] | |
| Embodiment 1 | 7.6 | 3.24 | 2.35 | 0.8189 | 0.0170104 | 0.0340 | 4.6790 | 0.72 |
| Embodiment 2 | 7.6 | 3.22 | 2.36 | 0.8174 | 0.01698 | 0.0340 | 4.6792 | 0.72 |
| Embodiment 3 | 7.6 | 3.50 | 2.17 | 0.8365 | 0.0173778 | 0.0348 | 4.6773 | 0.74 |
| comparative example 1 | 3.9 | 3.24 | 1.20 | 0.9356 | 0.0194364 | 0.0389 | 4.6675 | 0.83 |
| comparative example 2 | 11.3 | 3.24 | 3.49 | 0.7130 | 0.0148124 | 0.0296 | 4.6895 | 0.63 |
| comparative example 3 | 7.6 | 2.91 | 2.61 | 0.7925 | 0.0164636 | 0.0329 | 4.6816 | 0.70 |
| comparative example 4 | 7.6 | 2.53 | 3.00 | 0.7555 | 0.0156942 | 0.0314 | 4.6853 | 0.67 |
| comparative example 5 | 7.6 | 4.23 | 1.80 | 0.8753 | 0.0181838 | 0.0364 | 4.6734 | 0.77 |

(EXPERIMENTAL EXAMPLE)

EVALUATION OF ELECTRODE LAYER RESISTANCE

The electrode layer resistances of the cells manufactured according to the first to third embodiments and comparative examples 1 to 5 were measured using an MP tester under the following conditions.

MP Tester: This device measures electrode resistance by dividing the same into "electrode layer resistance" and "interfacial contact resistance between the current collector and electrode layer."

For the positive electrode, a 50mm×50mm sample was punched 5mm from the non-coated portion.

Using the measurement program (XF0517ERMv135e), the measure configuration value was set to current 100 Ua, the voltage range was set to 0.5V, and the cross-sectional electrode layer thickness (total thickness 160μm, cross-sectional thickness=[total thickness/2-current collector thickness]=65μm), the current collector thickness, and the current collector resistivity (Al foil: 2.82e-06) were inputted. The electrode was then positioned at the center of the probe unit pin and the measurement was performed once the contact between the pin and the electrode was complete.

LIFESPAN EVALUATION

For the 4680 cells manufactured according to the first to third embodiments and comparative examples 1 to 5, each cell was charged to 4.2V at a constant current-constant voltage of 0.25C at 55°C and discharged to 2.5V at a constant current of 0.33C, as one cycle. Repeated charge and discharge were performed. After 100 cycles, the capacity retention rate and the number of cycles at which the capacity retention rate reached 90% were measured.

The evaluation results are shown in Table 2 below.

[Table 2]

| | D50/d50 | conductive material relative content[wt%] | electrode layer resistance [mΩ] | lifespan |
|---|---|---|---|---|
| Embodiment 1 | 2.35 | 0.72 | 4.92 | 92.7 |

(continued)

|  | D50/d50 | conductive material relative content[wt%] | electrode layer resistance [mΩ] | lifespan |
|---|---|---|---|---|
| Embodiment 2 | 2.36 | 0.72 | 4.98 | 91.6 |
| Embodiment 3 | 2.17 | 0.74 | 5.10 | 91.7 |
| comparative example 1 | 1.20 | 0.83 | 7.12 | 81.0 |
| comparative example 2 | 3.49 | 0.63 | 4.98 | 78.0 |
| comparative example 3 | 2.61 | 0.70 | 5.91 | 89.5 |
| comparative example 4 | 3.00 | 0.67 | 6.01 | 84.2 |
| comparative example 5 | 1.80 | 0.77 | 5.23 | 87.2 |

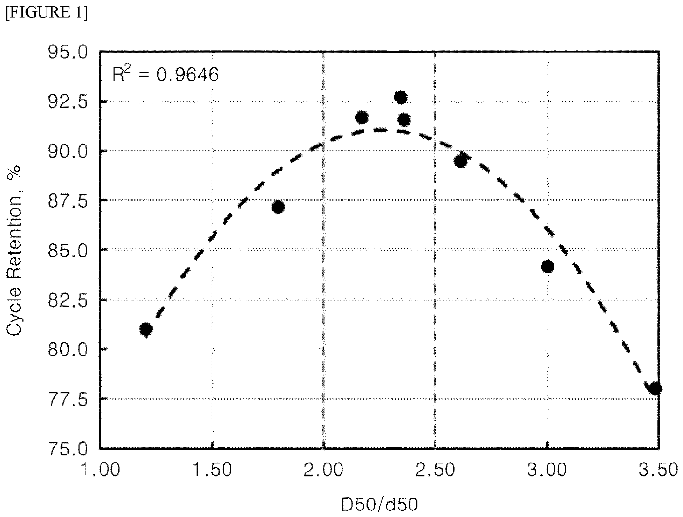

FIG. 1 graphically illustrates the lifespan evaluation results for the particle diameter ratio D50/d50 of the positive electrode active material and carbon nanotubes (conductive material) for the first to third embodiments and comparative examples 1 to 5.

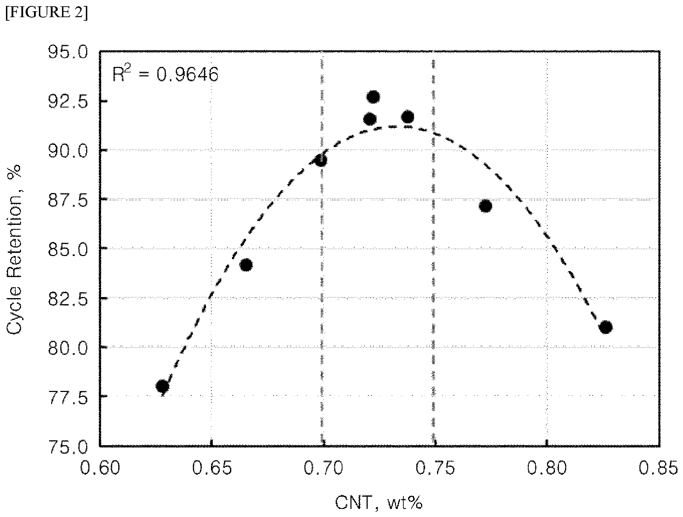

FIG. 2 is a graph illustrating the life evaluation results for the conductive material content wt% obtained through percolation calculation for the first to third embodiments and comparative examples 1 to 5.

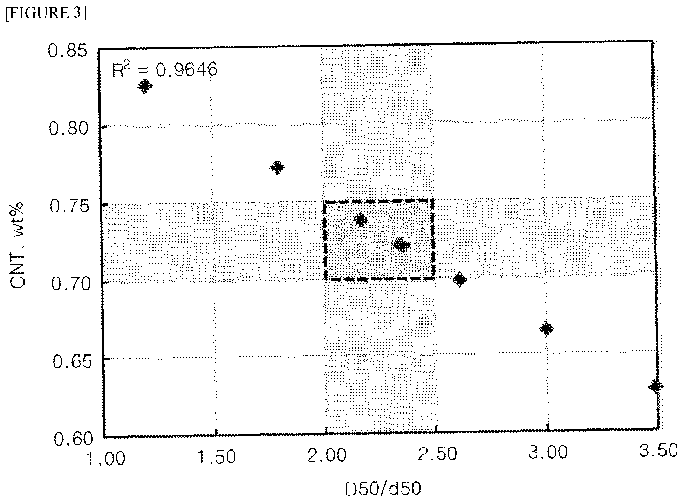

FIG. 3 illustrates the relationship between the conductive material content wt% obtained through percolation calculation for the particle diameter ratio D50/d50 of the positive electrode active material and carbon nanotube (conductive material) for the first to third embodiments and comparative examples 1 to 5.

From the results in Table 2 and FIGS. 1 to 3, it was confirmed that battery cells according to the first to third embodiments, which were manufactured with a particle diameter ratio D50/d50 of the positive electrode active material and carbon nanotube (conductive material) satisfying Equation 1 and using a positive electrode manufactured with a relative conductive material content wt% calculated accordingly, exhibited excellent electrode layer resistance and life characteristics. Battery cells according to comparative examples 1-5, which did not satisfy the conditions of Equation 1, used positive electrodes manufactured with a relative content wt% of conductive material according to percolation calculation. However compared to the first to third embodiments, it may be confirmed that both electrode layer resistance and life characteristics were not implemented well.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

[DESCRIPTION OF REFERENCE NUMERALS]

10: battery can
11: sidewall
12: bottom
13: positive electrode terminal (first electrode terminal)
14: terminal gasket
15: negative electrode terminal (second electrode terminal)
19: insulator
20: electrode assembly
21: first electrode
22: second electrode
23: current collector
24: active material layer
25: coated portion
26: non-coated portion
27: notched tab
28: separator

31: current collecting plate
32: terminal connecting portion
33: ring portion
34: electrode connecting portion
40: cap

**Claims**

1. A positive electrode active material layer composition comprising a positive electrode active material and a conductive material, wherein the conductive material comprises a carbon nanotube, and a ratio (D50/d50) of a particle diameter (D50) of the positive electrode active material at a cumulative volume of 50% to a particle diameter (d50) of the carbon nanotube at a cumulative volume of 50% satisfies Equation 1 below.

$$<\text{Equation 1}> \quad 2.0 \leq D50/d50 \leq 2.5$$

2. The positive electrode active material layer composition of claim 1, wherein the particle diameter (D50) of the positive electrode active material at the cumulative volume of 50% is $7\mu m$ to $8\mu m$, and the particle diameter (d50) of the carbon nanotube at the cumulative volume of 50% is $2.5\mu m$ to $4.0\mu m$.

3. The positive electrode active material layer composition of claim 1, wherein the positive electrode active material has a bimodal particle size distribution with two peaks at particle diameters of $3\mu m$ to $5\mu m$ and $10\mu m$ to $12\mu m$.

4. The positive electrode active material layer composition of claim 1, wherein a mass ratio of the positive electrode active material to the carbon nanotube is a value calculated by applying the ratio (D50/d50) to a formula for calculating a percolation threshold.

5. The positive electrode active material layer composition of claim 1, wherein an amount of the carbon nanotube is 0.70 to 0.75 wt% based on 100 wt% of a total weight of the positive electrode active material and the carbon nanotube.

6. The positive electrode active material layer composition of claim 1, wherein the positive electrode active material is a lithium complex transition metal compound represented by chemical formula 1 below:

   [Chemical Formula 1] $\quad Li_aNi_{(1-x-y)}Co_xM1yM2_wO_2$

   in Chemical Formula 1,

   $1.0 \leq a \leq 1.5$, $0 < x \leq 0.2$, $0 \leq y \leq 0.2$, $0 \leq w \leq 0.1$, $0 < x+y \leq 0.2$,
   M1 is at least one metal selected from Mn and Al, and
   M2 is at least one metal element selected from a group consisting of Ba, Ca, Zr, Ti, Mg, Ta, Nb and Mo.

7. The positive electrode active material layer composition of claim 6, wherein the carbon nanotube comprises at least one selected from a group consisting of single-walled carbon nanotube, multi-walled carbon nanotube, bundled carbon nanotube and combinations thereof.

8. A positive electrode for a secondary battery comprising: a current collector; and a positive electrode active material layer disposed on the current collector, wherein the positive electrode active material layer comprising a positive electrode active material layer composition according to any one of claims 1 to 7.

9. The positive electrode of claim 8, wherein the positive electrode active material layer comprises the positive electrode active material in an amount of 80 to 99wt% based on a total weight of the positive electrode active material layer.

10. A secondary battery comprising a positive electrode of claim 9, a negative electrode and separator.

11. The secondary battery of claim 10, wherein the negative electrode comprises at least one selected from a group consisting of a carbon-based negative electrode active material, a silicon-based negative electrode active material

and combinations thereof.

[FIGURE 1]

[FIGURE 2]

[FIGURE 3]

[FIGURE 4]

[FIGURE 5]

[FIGURE 6]

[FIGURE 7]

28  21

22

[FIGURE 8]

20

27

28

[FIGURE 9]

[FIGURE 10]

[FIGURE 11]

[FIGURE 12]

[FIGURE 13]

[FIGURE 14]

[FIGURE 15]

## INTERNATIONAL SEARCH REPORT

| | International application No. |
|---|---|
| | **PCT/KR2025/008603** |

### A. CLASSIFICATION OF SUBJECT MATTER

**H01M 4/36**(2006.01)i; **H01M 4/62**(2006.01)i; **H01M 4/525**(2010.01)i; **H01M 4/505**(2010.01)i; **H01M 4/131**(2010.01)i; **H01M 10/0525**(2010.01)i; **H01M 4/587**(2010.01)i; **H01M 4/38**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/36(2006.01); C08K 7/06(2006.01); H01M 10/052(2010.01); H01M 4/13(2010.01); H01M 4/131(2010.01); H01M 4/38(2006.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극(cathode), 도전재(conductive agent), 탄소나노튜브(carbon nanotube), 입경 (particle size), 퍼콜레이션(percolation), 이차전지(secondary battery)

### C. DOCUMENTS CONSIDERED TO BE RELEVANT

| Category* | Citation of document, with indication, where appropriate, of the relevant passages | Relevant to claim No. |
|---|---|---|
| X | CN 113611911 A (SHENZHEN CAPCHEM TECHNOLOGY CO., LTD.) 05 November 2021 (2021-11-05) claims 4, 6, 7, paragraphs [0006], [0024]-[0033], [0056], [0060] | 1,2,5-11 |
| Y | | 3,4 |
| Y | WO 2023-054308 A1 (PANASONIC INTELLECTUAL PROPERTY MANAGEMENT CO., LTD. et al.) 06 April 2023 (2023-04-06) paragraphs [0019], [0024], [0055] | 3 |
| Y | KR 10-2023-0086629 A (LG ENERGY SOLUTION, LTD.) 15 June 2023 (2023-06-15) paragraph [0025] | 4 |
| X | WO 2023-162609 A1 (ZEON CORPORATION et al.) 31 August 2023 (2023-08-31) paragraphs [0068], [0068], [0078]-[0082], [0088], [0107], [0109], table 1 | 1,2,5-11 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 September 2025** | **23 September 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 779 712 A1**

## INTERNATIONAL SEARCH REPORT

| | International application No. |
|---|---|
| | **PCT/KR2025/008603** |

**C.     DOCUMENTS CONSIDERED TO BE RELEVANT**

| Category* | Citation of document, with indication, where appropriate, of the relevant passages | Relevant to claim No. |
|---|---|---|
| X | KR 10-2023-0116784 A (ZEON CORPORATION) 04 August 2023 (2023-08-04)<br> paragraphs [0114], [0122], [0146], [0200], table 1 | 1,2,5-11 |
| X | JP 2023-137783 A (OSAKA GAS CO., LTD. et al.) 29 September 2023 (2023-09-29)<br> paragraphs [0030], [0033], [0065]-[0070], [0086] | 1,2,5-11 |
| A | JP 2019-061734 A (HITACHI LTD.) 18 April 2019 (2019-04-18)<br> claim 1 | 1-11 |
| A | JP 2020-035671 A (TOYOTA MOTOR CORP.) 05 March 2020 (2020-03-05)<br> claim 1 | 1-11 |

## INTERNATIONAL SEARCH REPORT
### Information on patent family members

International application No.

**PCT/KR2025/008603**

| Patent document cited in search report | | | Publication date (day/month/year) | Patent family member(s) | | | Publication date (day/month/year) |
|---|---|---|---|---|---|---|---|
| CN | 113611911 | A | 05 November 2021 | CN | 113611911 | B | 18 October 2022 |
| | | | | EP | 4379887 | A1 | 05 June 2024 |
| | | | | US | 2024-0356070 | A1 | 24 October 2024 |
| | | | | WO | 2023-005505 | A1 | 02 February 2023 |
| WO | 2023-054308 | A1 | 06 April 2023 | CN | 118020183 | A | 10 May 2024 |
| | | | | EP | 4411916 | A1 | 07 August 2024 |
| | | | | US | 2024-0396035 | A1 | 28 November 2024 |
| | | | | WO | 2023-054308 | A1 | 06 April 2023 |
| KR | 10-2023-0086629 | A | 15 June 2023 | CA | 3228290 | A1 | 15 June 2023 |
| | | | | CN | 117795723 | A | 29 March 2024 |
| | | | | EP | 4369449 | A1 | 15 May 2024 |
| | | | | JP | 2024-528009 | A | 26 July 2024 |
| | | | | KR | 10-2705295 | B1 | 11 September 2024 |
| | | | | US | 2024-0379937 | A1 | 14 November 2024 |
| | | | | WO | 2023-106856 | A1 | 15 June 2023 |
| WO | 2023-162609 | A1 | 31 August 2023 | CN | 118679608 | A | 20 September 2024 |
| | | | | EP | 4489135 | A1 | 08 January 2025 |
| | | | | KR | 10-2024-0158237 | A | 04 November 2024 |
| | | | | US | 2025-0158068 | A1 | 15 May 2025 |
| KR | 10-2023-0116784 | A | 04 August 2023 | CN | 116472296 | A | 21 July 2023 |
| | | | | EP | 4254562 | A1 | 04 October 2023 |
| | | | | US | 2024-0021823 | A1 | 18 January 2024 |
| | | | | WO | 2022-113704 | A1 | 02 June 2022 |
| JP | 2023-137783 | A | 29 September 2023 | CA | 3238830 | A1 | 25 May 2023 |
| | | | | CN | 118284992 | A | 02 July 2024 |
| | | | | EP | 4439695 | A1 | 02 October 2024 |
| | | | | JP | 2023-076135 | A | 01 June 2023 |
| | | | | JP | 2023-137781 | A | 29 September 2023 |
| | | | | JP | 2023-137785 | A | 29 September 2023 |
| | | | | KR | 10-2024-0108496 | A | 09 July 2024 |
| | | | | TW | 202337061 | A | 16 September 2023 |
| | | | | US | 2025-0033995 | A1 | 30 January 2025 |
| | | | | WO | 2023-090443 | A1 | 25 May 2023 |
| JP | 2019-061734 | A | 18 April 2019 | WO | 2017-110661 | A1 | 29 June 2017 |
| JP | 2020-035671 | A | 05 March 2020 | JP | 7033258 | B2 | 10 March 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240081414